# FASCICULE DE BREVET EUROPEEN

(11) **EP 3 235 114 B1**
(45) Date de publication et mention de la délivrance du brevet: **27.05.2020**
(21) Numéro de dépôt: 15821124.3
(22) Date de dépôt: 15.12.2015
(51) Int. Cl.: H02M 1/12, H02J 7/02, B60L 53/22

(54) **DISPOSITIF DE FILTRAGE DE MODE COMMUN**
GLEICHTAKTFILTERVORRICHTUNG
COMMON MODE FILTERING DEVICE

(30) Priorité: 16.12.2014 FR 1462512
(43) Date de publication de la demande: 25.10.2017
(73) Titulaire: RENAULT s.a.s., 92100 Boulogne-Billancourt (FR); Schneider Electric Industries SAS, 92500 Rueil-Malmaison (FR)
(72) Inventeur: GOURAUD, Sébastien, 78280 Guyancourt (FR); SEURE, Philippe, 59000 Lille (FR)
(74) Mandataire: Fédit-Loriot
(86) Numéro de dépôt international: PCT/FR2015/053510
(87) Numéro de publication internationale: WO 2016/097581

(56) Documents cités:
- EP-A2- 2 720 357
- WO-A1-2013/087823
- FR-A1- 2 977 086

## Description

La présente invention concerne un dispositif de charge d'une batterie d'un véhicule automobile électrique, comprenant une borne de recharge connectée à un réseau d'alimentation électrique et destinée à être reliée à un chargeur intégré au véhicule apte à assurer la recharge de la batterie.

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule. De manière à assurer la recharge de ces batteries haute tension, il est connu d'équiper le véhicule d'un chargeur, intégré au véhicule électrique, et destiné à être relié à une borne de recharge. Un tel chargeur comporte essentiellement un convertisseur alternatif continu permettant de redresser la puissance alternative du réseau électrique pour charger les batteries.

De façon connue en soi, une borne de recharge est l'infrastructure qui permet la recharge des véhicules électriques. Une borne de recharge comporte au moins un point de charge, qui est typiquement matérialisé par un socle de prise. Dans le cadre du déploiement de solutions de recharge accélérée de véhicule automobile électrique, on connaît des stations de charge comportant par exemple 7 points de charge permettant d'injecter une puissance électrique jusqu'à 22 kVA (alimentation en triphasé, 32A) et par exemple 1 point de charge permettant d'injecter une puissance électrique jusqu'à 3,7 kVA (alimentation en monophasé, 16A).

Dans ce contexte, lors de la charge, il arrive que le diagnostic du véhicule indique un défaut dit « Main Leakage High Frequency » selon une terminologie anglo-saxonne, qui révèle que des courants de fuite importants ont été détectés entre 400 Hz et 150 kHz. Ces courants de fuite peuvent résulter de dispositifs perturbateurs induisant des courants parasites de mode commun. Ces courants de mode commun se rebouclent par le châssis et le fil de terre relié au neutre du réseau extérieur. Deux raies en particulier peuvent être particulièrement visibles au niveau du fil de terre du véhicule automobile, à savoir 1650 Hz et 1950 Hz et ce, à des niveaux qui justifient l'arrêt de la charge du véhicule, car le risque d'aveuglement du dispositif différentiel en amont est fort. Il a pu être constaté que ces raies significatives du courant de fuite varient en amplitude en fonction de l'ensoleillement, de sorte qu'il est probable que des installations de panneaux photovoltaïques voisines de la borne de recharge puissent être la cause de ces perturbations en mode commun. En outre, aucune harmonique de tension significative n'est visible en mode différentiel.

Une solution généralement appliquée pour se prémunir contre ce type de perturbations en mode commun lorsqu'on ne peut pas agir directement sur le niveau des émissions non désirées provenant de la source polluante extérieure, est d'isoler la borne de recharge au moyen d'un transformateur d'isolement. Grâce au transformateur d'isolement, quoi qu'il arrive du côté de l'enroulement secondaire, aucun courant de fuite ne peut en résulter ou se reporter du côté de l'enroulement primaire. Cependant, dans le contexte évoqué ci-dessus des puissances électriques mises en œuvre dans les stations de charges, le transformateur d'isolement devrait présenter une puissance de 200 kVA. Or, un tel transformateur est particulièrement lourd, puisqu'il pèse au minimum 500 kg, et coûteux. Il serait donc particulièrement souhaitable d'éviter d'avoir à utiliser un tel équipement, contrairement à ce qui est habituellement préconisé. De plus, ce transformateur d'isolement n'est pas extensible, ce qui présente un inconvénient s'il y a besoin de mettre en œuvre plus points de charge au niveau de la station. Aussi, cette solution n'est pas pleinement satisfaisante.

Par ailleurs, on connaît des solutions qui font état de la correction des harmoniques en mode différentiel, soit entre phase et neutre ou entre phases, mais ce type de solutions est inadapté dans la mesure où comme indiqué plus haut, il a pu être constaté qu'aucune harmonique de tension n'est visible en mode différentiel.

Aussi, il existe un besoin pour immuniser un dispositif de charge du type précité contre les perturbations en mode commun provenant d'autres équipements, ou plus généralement de l'environnement extérieur et, en particulier, pour empêcher toute circulation de courant de mode commun de l'extérieur vers le véhicule en charge, en particulier dans le cadre de la recharge accélérée de véhicule automobile électrique. Le document FR2977086 montre un système de compensation d'un courant de fuite d'un chargeur de batterie électrique embarqué dans un véhicule et connecté à un réseau d'alimentation, un courant de fuite circulant du chargeur vers le réseau d'alimentation sur la masse. Le système de compensation comprend un moyen de compensation active de courant de fuite apte à émettre sur la masse un courant de compensation. Ce système est plutôt compliqué.

Ce but est atteint grâce à un dispositif électrique de charge d'une batterie d'un véhicule automobile électrique, ledit dipositif comprenant une borne de recharge connectée à un réseau d'alimentation électrique par l'intermédiaire d'un transformateur et destinée à être reliée à un chargeur intégré au véhicule automobile apte à assurer la recharge de la batterie, le dispositif électrique de charge omprenant au moins un filtre RLC par lequel des courants de mode commun d'une source de perturbation extérieure rebouclent au lieu d'aller vers le chargeur.

Un tel agencement permet avantageusement de se passer d'un lourd et coûteux transformateur d'isolement, qui est habituellement préconisé pour les problèmes de mode commun pour les applications de charge avec un chargeur non isolé.

Le filtre RLC est raccordé entre le neutre et la terre.

Le filtre RLC comprend une branche connectée entre le neutre et la terre, ladite branche comportant en série une résistance, un condensateur et une inductance. Avantageusement, le filtre RLC est raccordé en amont d'un dispositif différentiel de courant résiduel de valeur maximale 30 mA équipant le dispositif de charge. Préférentiellement, le filtre RLC comporte un condensateur dont une première extrémité est connectée au neutre, une résistance dont une première extrémité est reliée à la deuxième extrémité du condensateur, et une inductance, dont une première extrémité est reliée à la deuxième extrémité de la résistance et dont une deuxième extrémité est reliée à la terre. Ces éléments étant en série, ils peuvent être permutés.

De préférence, le filtre RLC est accordé sur une fréquence de sensiblement 1650 Hz.

De préférence, le filtre RLC est composé des éléments suivants : R= 330mOhm, C=12µF et L=750µH.

Selon un mode de réalisation particulier, le dispositif comprend une batterie de filtres RLC, accordés chacun sur une fréquence respective différente.

D'autres particularités et avantages de l'invention ressortiront à la lecture de la description faite ci-après d'un mode de réalisation particulier de l'invention, donné à titre indicatif mais non limitatif, en référence aux figures annexées, dans lesquelles :
- La Figure 1 montre un schéma de principe simplifié d'un dispositif de charge d'un véhicule électrique en régime de neutre, c'est-à-dire avec le neutre à la terre côté transformateur et le neutre à la terre côté chargeur ;
- La Figure 2 représente un mode de réalisation d'un dispositif de filtrage de mode commun dans un dispositif de recharge illustré à la figure 1 ;
- La Figure 3 montre un diagramme de valeurs d'impédance du dispositif de filtrage en fonction de la fréquence.

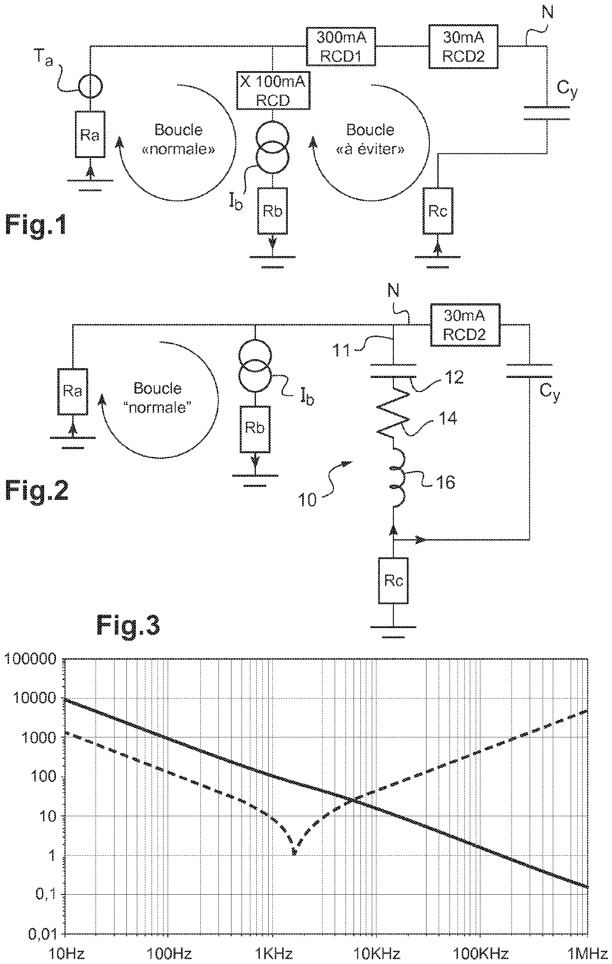

L'exemple montré à la figure 1 du schéma équivalent du dispositif de charge d'une batterie d'un véhicule électrique en régime de neutre TT, permet d'illustrer la manière dont les courants de mode commun issus d'une source de perturbation extérieure se propagent jusqu'au véhicule. Seul le mode commun étant représenté à la figure 1, les courants circulent entre le neutre et la terre. Ainsi, le neutre N du secondaire du transformateur Ta de la borne de recharge est relié à la terre, par l'intermédiaire d'une résistance Ra, correspondant à la résistance de la prise de terre du neutre. Un premier dispositif différentiel de courant résiduel RCD1, par exemple de 300 mA est prévu en tête du circuit, en amont du chargeur intégré au véhicule, ainsi qu'un second dispositif différentiel de courant résiduel RCD2 de valeur maximale 30 mA. Le chargeur intégré au véhicule peut être représenté au 1^{er} ordre en mode commun par une capacité Cy et dispose de son propre raccordement à la terre, par l'intermédiaire d'une résistance Rc, correspondant à la résistance de la liaison à la terre de la borne de recharge.

Dans ce qui suit, par amont, on entend une disposition d'un élément dans une direction vers le transformateur et par aval, une disposition vers la charge.

Une source de perturbation extérieure, pouvant être représentée par une branche reliée entre le neutre N et la terre, comportant une source de courant Ib et une résistance Rb en série entre la source de courant et la terre, éventuellement en amont d'un autre dispositif différentiel de courant résiduel RCD de valeur multiple de 100mA, crée un circuit de mode commun générant des courants de mode commun circulant entre le neutre et la terre. Plus précisément, la source de perturbation extérieure émet des perturbations en mode commun de telle sorte que la propagation de la perturbation en mode commun crée des courants qui vont se répartir entre une première boucle, référencée boucle « normale » sur la figure 1, dans laquelle ces courants vont circuler dans la terre et vont revenir au transformateur pour boucler le circuit, et une seconde boucle, référencée boucle « à éviter » sur la figure 1, comportant le chargeur Cy et dans laquelle ces courants de mode commun vont se refermer en passant par le chargeur Cy.

On comprend qu'une forte impédance Ra maximisera le courant circulant dans Rc et Cy. A contrario, si Rc est élevé, il y aura moins de courant dans Cy. On se préoccupe ici des courants de mode commun dits « hautes fréquences », c'est-à-dire comprises entre 400Hz et 150kHz, dans la mesure où ce sont ces courants en particulier qui ont un effet aveuglant vis-à-vis du dispositif différentiel de courant résiduel RCD2 de valeur maximale 30 mA en amont du chargeur dans le circuit.

Aussi, comme illustré à la figure 2, le principe de neutralisation de ces perturbations consiste à insérer dans le circuit un filtre RLC 10 par lequel ces courants de mode commun rebouclent au lieu d'aller vers le chargeur intégré au véhicule, de sorte à empêcher la circulation de ces courants vers le véhicule en charge. Le filtre RLC 10 est constituée par une branche R-L-C 11, connectée entre le neutre N et la terre, en amont du dispositif différentiel de courant résiduel RCD2 de valeur maximale 30 mA.

Plus précisément, le filtre RLC 10 comporte un condensateur 12 dont une première extrémité est connectée au neutre, en amont du dispositif différentiel de courant résiduel RCD2 de valeur maximale 30 mA, une résistance 14 dont une première extrémité est reliée à la deuxième extrémité du condensateur 12, et une inductance 16, dont une première extrémité est reliée à la deuxième extrémité de la résistance 14 et dont une deuxième extrémité est reliée à la terre par l'intermédiaire de la résistance Rc. Ces éléments sont en série et peuvent donc être permutés.

Le filtre RLC 10 permet ainsi de court-circuiter les fréquences précises qui sont perturbantes, en agissant comme une dérivation de ces courants de mode commun. Pour ce faire, la fréquence d'accord fᵣ du filtre est placée sur la fréquence des courants que l'on veut éliminer. Le filtre présente en effet, à cette fréquence d'accord une impédance minimale. Il permet donc de dériver la presque totalité des courants de mode commun injectés de fréquence fᵣ.

Selon un exemple de réalisation, le filtre RLC 10 est mis en œuvre pour une fréquence de 1650Hz environ et est composé des éléments suivants : R= 330mOhm, C=12µF, L=750µH.

La Figure 3 montre la courbe d'impédance d'un tel filtre RLC 10 en fonction de la fréquence. Sur la figure 3, l'impédance du filtre RLC 10 est illustrée en traits pointillés, tandis que la courbe en trait plein représente l'impédance de la capacité Cy équivalente au chargeur. Il apparaît ainsi que l'impédance du filtre RLC tend vers une valeur assez faible pour les fréquence aux environs de 1650Hz, qui correspondent aux fréquences des courants qui sont la source des perturbations et que l'ont veut donc éliminer. En outre, la figure 3 montre qu'à ces fréquences, l'impédance du filtre est très inférieure à l'impédance de la capacité Cy, de sorte que la presque totalité des courants vers 1,6 kHz passera donc préférentiellement par le filtre RLC 10 au lieu d'aller vers le chargeur.

Un tel filtre RLC ne génère en outre avantageusement que peu de fuites à la fréquence industrielle (50Hz) car il est disposé entre le neutre et la terre et que le potentiel y est proche de zéro. De plus, il est situé avantageusement en amont du dispositif différentiel de courant résiduel RCD2 de valeur maximale 30 mA, de sorte que le risque de disjonction intempestive est faible.

Selon un mode de réalisation particulier, correspondant à un cas de figure où les perturbations extérieures créent des courants de mode commun à des fréquences différentes et suffisamment disjointes pour pouvoir être traitées par un unique filtre, on prévoit de mettre en œuvre autant de filtres RLC que de fréquences à traiter. Ainsi, on raccorde, entre le neutre et la terre, une batterie de filtres RLC, accordés chacun sur une fréquence respective différente, de façon que les courants de mode commun situés à ces fréquences différentes et disjointes soient dérivés vers la terre par le filtre correspondant de la batterie de filtres, et ne circulent pas vers le chargeur du véhicule.

## Revendications

1. Dispositif électrique de charge d'une batterie d'un véhicule automobile électrique, ledit dipositif comprenant une borne de recharge apte à être connectée à un réseau d'alimentation électrique par l'intermédiaire d'un transformateur (Ta) et destinée à être reliée à un chargeur (Cy) intégré au véhicule automobile apte à assurer la recharge de la batterie, le dispositif électrique de charge comprenant au moins un filtre RLC (10) par lequel des courants de mode commun d'une source de perturbation extérieure rebouclent par le filtre RLC au lieu d'aller vers le chargeur, **caractérisé en ce que** le filtre RLC (10) comprend une branche (11) connectée entre le neutre (N) et la terre, ladite branche comportant en série une résistance (14), un condensateur (12) et une inductance (16).

2. Dispositif selon la revendication 1, **caractérisé en ce que** le filtre RLC (10) est raccordé entre le neutre (N) et la terre.

3. Dispositif selon l'une quelconque des revendications 1 ou 2, **caractérisé en ce qu'**il comprend un dispositif différentiel de courant résiduel (RCD2) de valeur maximale 30 mA en amont duquel le filtre RLC (10) est raccordé.

4. Dispositif selon l'une quelconque des revendications précédentes, **caractérisé en ce que** le filtre RLC (10) comporte un condensateur (12) dont une première extrémité est connectée au neutre (N), une résistance (14) dont une première extrémité est reliée à la deuxième extrémité du condensateur (12), et une inductance (16), dont une première extrémité est reliée à la deuxième extrémité de la résistance (14) et dont une deuxième extrémité est reliée à la terre.

5. Dispositif selon l'une quelconque des revendications précédentes, **caractérisé en ce que** le filtre RLC est accordé sur une fréquence de sensiblement 1650 Hz.

6. Dispositif selon la revendication 5, **caractérisé en ce que** le filtre RLC est composé des éléments suivants : R= 330mOhm, C=12µF et L=750µH.

7. Dispositif selon l'une quelconque des revendications 1 à 6, **caractérisé en ce qu'**il comprend une batterie de filtres RLC, accordés chacun sur une fréquence respective différente.

## Patentansprüche

1. Elektrische Ladevorrichtung einer Batterie eines elektrischen Kraftfahrzeugs, wobei die Vorrichtung eine Ladestation umfasst, die imstande ist, über einen Transformator (Ta) an ein Stromversorgungsnetz angeschlossen zu werden, und dazu bestimmt ist, mit einem in das Fahrzeug integrierten Ladegerät (Cy) verbunden zu werden, das imstande ist, für die Aufladung der Batterie zu sorgen, wobei die elektrische Ladevorrichtung mindestens einen RLC Filter (10) umfasst, durch den Gleichtaktströme einer externen Störquelle durch den RLC Filter weitergeschleift werden, anstatt zum Ladegerät zu gehen, **dadurch gekennzeichnet, dass** der RLC Filter (10) einen Zweig (11) umfasst, der zwischen dem Nullleiter (N) und der Erde angeschlossen ist, wobei der Zweig in Reihe einen Widerstand (14), einen Kondensator (12) und eine Induktivität (16) beinhaltet.

2. Vorrichtung nach Anspruch 1, wobei der RLC Filter (10) zwischen dem Nullleiter (N) und der Erde angeklemmt ist.

3. Vorrichtung nach einem der Ansprüche 1 oder 2, **dadurch gekennzeichnet, dass** sie eine Reststromdifferentialvorrichtung (RCD2) mit einem maximalen Wert von 30 mA umfasst, stromaufwärts derer der RLC Filter (10) angeklemmt ist.

4. Vorrichtung nach einem der vorstehenden Ansprüche **dadurch gekennzeichnet, dass** der RLC Filter (10) einen Kondensator (12), dessen erstes Ende an den Nullleiter (N) angeschlossen ist, einen Widerstand (14), dessen erstes Ende an das zweite Ende des Kondensators (12) angeschlossen ist, und eine Induktivität (16) beinhaltet, dessen erstes Ende an das zweite Ende des Widerstandes (14) angeschlossen ist, und dessen zweites Ende an die Erde angeschlossen ist.

5. Vorrichtung nach einem der vorstehenden Ansprüche **dadurch gekennzeichnet, dass** der RLC Filter auf eine Frequenz von im Wesentlichen 1 650 Hz abgestimmt ist.

6. Vorrichtung nach Anspruch 5, **dadurch gekennzeichnet, dass** sich der RLC Filter aus den folgenden Elementen zusammensetzt: R = 330 mOhm, C = 12 µF und L = 750 µH.

7. Vorrichtung nach einem der Ansprüche 1 bis 6, **dadurch gekennzeichnet, dass** sie eine RLC Filterbatterie umfasst, die jeweils auf eine jeweilige unterschiedliche Frequenz abgestimmt sind.

## Claims

1. Electrical device for charging a battery of an electric motor vehicle, said device comprising a charging station able to be connected to a power grid via a transformer (Ta) and intended to be connected to a charger (Cy) built into the motor vehicle capable of recharging the battery, the electrical charging device comprising at least one RLC filter (10) through which common mode currents of an external interference source are looped back via the RLC filter rather than continuing to the charger, **characterised in that** the RLC filter (10) comprises a branch (11) connected between the neutral (N) and the earth, said branch including in series a resistor (14), a capacitor (12) and an inductor (16).

2. Device according to claim 1, **characterised in that** the RLC filter (10) is connected between the neutral (N) and the earth.

3. Device according to any of claims 1 or 2, **characterised in that** it comprises a residual current differential device (RCD2) with a maximum value of 30 mA upstream of which the RLC filter (10) is connected.

4. Device according to any preceding claim, **characterised in that** the RLC filter (10) includes a capacitor (12) of which a first end is connected to the neutral (N), a resistor (14) of which a first end is connected to the second end of the capacitor (12), and an inductor (16), of which a first end is connected to the second end of the resistor (14) and of which a second end is connected to the earth.

5. Device according to any preceding claim, **characterised in that** the RLC filter is tuned to a frequency of substantially 1650 Hz.

6. Device according to claim 5, **characterised in that** the RLC filter is comprised of the following elements: R= 330mOhm, C=12µF and L=750µH.

7. Device according to any of claims 1 to 6, **characterised in that** it comprises a bank of RLC filters, each one tuned to a different respective frequency.
